# EUROPÄISCHE PATENTSCHRIFT

(11) **EP 1 427 684 B1**
(45) Veröffentlichungstag und Bekanntmachung des Hinweises auf die Patenterteilung: **31.05.2006**
(21) Anmeldenummer: 02797948.3
(22) Anmeldetag: 03.09.2002
(51) Int. Cl.: C07B 57/00, C07C 33/12

(54) **VERFAHREN ZUR BESTIMMUNG DES ENANTIOMERENVERHÄLTNISSES VON TRIMETHYLCYCLOPENTEN-DERIVATEN**
METHOD FOR DETERMINING THE ENANTIOMER RATIO TRIMETHYLCYCLOPENTENE DERIVATIVES
PROCEDE PERMETTANT DE DETERMINER LE RAPPORT ENANTIOMERIQUE DE DERIVES DE TRIMETHYLCYCLOPENTENE

(30) Priorität: 12.09.2001 DE 10144888
(43) Veröffentlichungstag der Anmeldung: 16.06.2004
(73) Patentinhaber: KAO CORPORATION, Tokyo 103-8210 (JP)
(72) Erfinder: MARKERT, Thomas, 40789 Monheim (DE); MOSANDL, Armin, 97337 Dettelbach (DE); BILKE, Steffi, 40885 Ratingen (DE)
(74) Vertreter: HOFFMANN EITLE
(86) Internationale Anmeldenummer: PCT/EP2002/009827
(87) Internationale Veröffentlichungsnummer: WO 2003/022784

(56) Entgegenhaltungen:
- EP-A- 0 829 463
- EP-A- 0 841 318
- EP-A- 0 997 534
- EP-A- 1 031 629
- REINHARDT R ET AL: "Enantiomer separation of alpha-campholene and fencholene derivatives by capillary gas chromatography on permethylated cyclodextrin phases I. Compounds separable with single columns" JOURNAL OF CHROMATOGRAPHY A, ELSEVIER SCIENCE, NL, vol. 697, no. 1, 21 April 1995 (1995-04-21), pages 475-484, XP004023082 ISSN: 0021-9673 cited in the application
- STEINBORN A ET AL: "Enantiomer separation of alpha-campholene and fencholene derivatives by capillary gas chromatography on permethylated cyclodextrins II. Compounds separable with coupled techniques" JOURNAL OF CHROMATOGRAPHY A, ELSEVIER SCIENCE, NL, vol. 697, no. 1, 21 April 1995 (1995-04-21), pages 485-494, XP004023083 ISSN: 0021-9673 cited in the application

## Beschreibung

### Gebiet der Erfindung

Die vorliegende Erfindung betrifft ein Verfahren zur Bestimmung des Enantiomerenverhältnisses von Sandelriechstoffen, bei denen es sich strukturell um Trimethylcyclopenten-Derivate handelt.

### Stand der Technik

Sandelriechstoffe stellen eine bedeutende Klasse von Riechstoffen dar. Eine große Zahl dieser Riechstoffe ist strukturell dadurch charakterisiert, daß sie einen 4-(2,2,3-trimethylcyclopent-3-en)-1-yl-Rest als gemeinsames Strukturelement enthalten. Dieses Strukturelement ist in der Regel mit einem Alkylrest verknüpft, der gesättigt oder olefinisch ungesättigt, geradkettig oder verzweigt sein kann und der eine OH- oder eine CHO-Gruppe enthält. Der genannte Rest enthält ein Chiralitätszentrum, nämlich am C-1. Dies bedeutet, daß die entsprechenden Sandelriechstoffe als Mischung von Enantiomeren vorliegen können. Da häufig nur eines der Enantiomeren geruchlich wertvoll ist, ist eine rasche und zuverlässige Bestimmung des Enantiomerenverhältnisses für die Praxis von großer Bedeutung. Eine solche ist dem Fachmann aber bis heute auf dem hier in Rede stehenden Fachgebiet nicht bekannt.

In diesem Zusammenhang sei auf folgendes hingewiesen: 2-Methyl-4-(2,2,3-trimethylcyclopent-3-en-1-yl)-but-2-enol, das ein Chiralitätszentrum am C-1 des Cyclopentenringes aufweist, und das von verschiedenden Herstellern kommerziell vertrieben wird, ist ein sehr wichtiger synthethischer Sandelriechstoff; hier haben jüngere Fachpublikationen unterschiedliche Anschauungen hinsichtlich der Frage vertreten, welches Enantiomer für den ausgeprägten Sandelgeruch verantwortlich ist. Buchbauer et. al haben 1997 angegeben, das (R)-(+)-Enantiomer habe eine süße, an Rose erinnernde Duftnote, das (S)-(-)-Enantiomer dagegen weise den typischen Sandelduft sowie animalische Noten auf [G. Buchbauer et al., Chirality 1997, Seiten 380-385]. Dagegen vertraten Bajgrowicz et al. 1998 die Auffassung, der ausgeprägte Sandelduft sei auf das (R)-(+)-Enantiomer zurückzuführen [J. Bajgrowicz et al. Helv. Chimica Acta 1998, Seiten 1349-1358]. Bajgrowicz et al. haben selbst darauf hingewiesen, daß in der Literatur gegensätzliche Struktur-Geruchs-Korrelationen bezüglich 2-Methyl-4-(2,2,3-trimethyleyclopent-3-en-1-yl)-but-2-enol publiziert worden sind, nämlich zum einen die gerade erwähnte Publikation von Buchbauer et al., zum anderen EP-A- 829 463.

Im übrigen berichten Engewald et al. über die Enantiomerentrennung von α-Campholen-Derivaten durch Kapillargaschromatographie mittels permethylierter Cyclodextrinphasen [W. Engewald et al., Journal of Chromatography A, 1995, Seiten 475-484 und Seiten 485-494]. Ihre Bemühungen zur Enantiomerentrennung von 2-Methyl-4-(3-ethyl-2,2-dimethylcyclopent-3-en-1-yl)-but-3-enal und 2-Methyl-4-(3-ethyl-2,2-dimethylcyclopent-3-en-1-yl)-but-3-enol auf permethylierten Cyclodextrinphasen blieben allerdings ohne Erfolg. Dies ist auch im Hinblick auf die oben bezüglich 2-Methyl-4-(2,2,3-trimethylcyclopent-3-en-1-yl)-but-2-enol zitierten Ergebnisse, da sich die untersuchten Stoffe strukturell sehr nahestehen, zu erwarten.

**Cyclodextrine** sind cyclische Oligomere aus α-1,4-verknüpften Glucopyranoseeinheiten und bereits seit 1891 bekannt. Sie entstehen durch mikrobiellen Abbau von Stärke. Die Zahl der Glucoseeinheiten kann dabei bis zu 12 erreichen, am besten untersucht sind jedoch die aus 6, 7, und 8 Monomeren (α-, β-, γ-Cyclodextrin). Alle diese Moleküle bilden eine Art Konus, dessen Größe von der Anzahl der Glucoseeinheiten abhängt. Die primären Hydroxygruppen am C-6 bilden einen Rand des Konus, die sekundären an C-2 und C-3 den zweiten. Im Inneren überwiegen aliphatische CH-Bindungen. Diese Anordnung führt zu einem Molekül mit einem hydrophilen äußeren Rand und einer lipophilen Tasche. Weil Cyclodextrine ungiftig und biologisch abbaubar sind, haben sie in vielen Bereichen Anwendung gefunden. So werden lipophile Wirkstoffe von Medikamenten in Cyclodextrine eingeschlossen, um die Aufnahme in das wäßrige System des Körpers zu verbessern.

**EP-A- 1 031 629** beschreibt ein Verfahren zur Herstellung stereoisomerer Carbonsäureester. Im experimentellen Teil wird die Bestimmung der absoluten Konfiguration und des Enantiomeren- und Diastereomerenüberschusses näher beschrieben. Demnach wurde der Enantiomerenüberschuß der Carbonsäureester gaschromatographisch mittels einer Heptakis-(2,3-di-O-acetyl-6-O-TBDMS)-β-cyclodextrin-Säule (25 m x 0,25 mm, Prof. W.A. König, Universität Hamburg) bestimmt. Der Enantiomerenüberschuß des Alkohols wurde per Gaschromatographie über eine Heptakis-(2,3,6-tri-O-methyl)-β-cyclodextrin-Säule (50 m x 0,25 mm, CS-Chromatographie-Service, Langerwehe) bestimmt.

**EP-A- 997 534** beschreibt ein Verfahren zur Trennung racemischer Mischungen von Arylalkylcarbonsäureestern. Die chemische und optische Reinheit der Verbindungen wurden über NMR- und GC-Analyse im Vergleich zum Racemat nachgewiesen bzw. bestimmt. Die GC-Analysen wurden mit einer Optima 5-Säule (25 m x 0,25 mm; Macherey & Nagel, Düren, Germany) zur Bestimmung des Umsatzes und Reinheit und mit einer Heptakis(2,3-di-O-acetyl-6-O-TBDMS)-β-cyclodextrin-Säule (25 m x 0,25 mm, Prof. W.A. König, Universität Hamburg) zur Bestimmung des Enantiomerenüberschusses durchgeführt.

**EP-A- 829 463** beschreibt Butenole der nachstehend wiedergegebenen Formel:

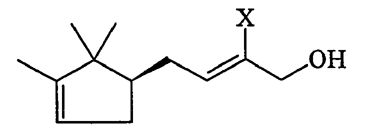

Darin bedeutet der Rest X eine Alkylgruppe mit 1 bis 3 C-Atomen. Diese Butenole sollen sich durch einen ausgeprägten Sandelduft auszeichnen. Die genannte EP-A weist bei der Würdigung des Standes der Technik darauf hin, daß Versuche zur Enantiomerentrennung von 2-Ethyl-4-(2,2,3-trimethylcyclopent-3-en-1-yl)-2-buten-1-ol mittels Gaschromatographie unter Einsatz einer chiralen Säule (nachfolgend auch als Enantio-GC bezeichnet) fehlgeschlagen sind (vergleiche EP-A- 829 463, Seite 2, Zeilen 22-24).

EP 0 841 318 A2 betrifft bestimmte optische Isomere von Campholenaldehyd-Derivaten. Die optische Reinheit der Enantiomeren dieser Derivate wird unter Verwendung einer OV-1701/Octakis(6-methyl-2,3-dipentyl)-γ-cyclodextrin chiralen stationären Phase mittels Gaschromatographie gemessen.

### Beschreibung der Erfindung

Aufgabe der vorliegenden Erfindung war es ein Verfahren bereitzustellen, das eine rasche und zuverlässige Bestimmung des Enantiomerenverhältnisses von Sandelriechstoffen, die einen (2,2,3-trimethylcyclopent-3-en-1-yl)-Rest als gemeinsames Strukturelement enthalten, gestattet.

Gegenstand der vorliegenden Erfindung ist ein Verfahren zur Bestimmung des Enantiomerenverhältnisses von Trimethylcyclopenten-Derivaten der Struktur (I) 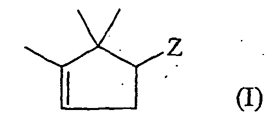 worin Z einen Alkylrest mit 1 bis 10 C-Atomen, der gesättigt oder olefinisch ungesättigt, geradkettig oder verzweigt sein kann und der durch eine OH- oder CHO-Gruppe substituiert ist, bedeutet, durch Kapillargaschromatographie, wobei man eine stationäre Phase einsetzt, die mindestens eine Verbindung, die ausgewählt ist aus der Gruppe Heptakis-(2,3-di-O-methyl-6-O-tert.-butyldimethylsilyl)-β-Cyclodextrin und Heptakis-(2,3-di-O-acetyl-6-O-tert.-butyldimethylsilyl)-β-Cyclodextrin und mindestens ein Polysiloxan enthält, wobei man das Mischungsverhältnis von Cyclodextrinderivaten und Polysiloxanen auf einen Wert im Bereich von 10 : 90 bis 50 : 50 einstellt.

Es sei ausdrücklich angemerkt, daß es für den Fachmann überraschend ist, daß die oben genannte Aufgabe durch das Verfahren gemäß der vorliegenden Erfindung gelöst wird. Zwar ist aus dem Stand der Technik wie oben dargestellt bekannt, daß sich mittels Enantio-GC spezielle Substanzen analytisch charakterisieren lassen, jedoch gehört es gleichfalls zum allgemeinen Fachwissen, daß sich solche speziellen Ergebnisse nicht ohne weiteres und ohne erfinderischen Beitrag auf andere Substanzklassen übertragen lassen. Dies wird auch durch den ebenfalls bereits zitierten Hinweis in der EP-A- 829 463 belegt, wonach Versuche zur Enantiomerentrennung von 2-Ethyl-4-(2,2,3-trimethylcyclopent-3-en-l-yl)-2-buten-1-ol mittels Enantio-GC fehlgeschlagen sind.

Die **Herstellung der Verbindungen (I)** ist dem Fachmann bekannt und erfolgt nach an sich bekannten Syntheseverfahren der organischen Chemie. Für die wichtige Klasse der ggf. 2-Alkyl-substituierten 4-(2,2,3-trimethylcyclopent-3-enyl)-but-2-en-1-ole, die attraktive Sandelriechstoffe darstellen, geht ein allgemein bekannter Syntheseweg von α-Campholenaldehyd aus, der sich in Gegenwart üblicher Katalysatoren mit entsprechenden kurzkettigen Aldehyden und Ketonen, zum Beispiel Propionaldehyd, 2-Butanon oder 3-Pentanon in einer gemischten Aldolkondensation umsetzen läßt, wobei über intermediäre Aldolkondensationsprodukte unter Wasserabspaltung direkt die entsprechenden α,β-ungesättigten Aldolkondensationsprodukte erhalten werden. Zweckmäßigerweise führt man die Reaktion mit einem Überschuß der reaktiveren und leichter flüchtigen Komponenten durch. Als Katalysatoren kommen zum Beispiel Natriumhydroxid, Natriummethanolat, Natriumamid, Kalium-tert.-butanolat oder heterogene Katalysatoren wie Kaliumfluorid auf Aluminiumoxid in Frage. Die Carbonylfunktion der Aldolkondensationsprodukte läßt sich in einer weiteren Reaktion selektiv zur OH-Gruppe reduzieren, zum Beispiel mittels komplexer Hydride wie Lithiumaluminiumhydrid oder Lithium- bzw. Natriumborhydrid. Es ist auch möglich, die CHO-Funktion der Aldolkondensationsprodukte mittels Wasserstoff in Gegenwart von Cu-Zn-Katalysatoren zu reduzieren.

Die **stationäre Phase** enthält neben den erfindungsgemäß einzusetzenden Cyclodextrinderivaten zusätzlich mindestens ein Polysiloxan, wobei man das Mischungsverhältnis von Cyclodextrinderivaten und Polysiloxanen auf einen Wert im Bereich von 10 : 90 bis 50 : 50 einstellt. Die Mischungsverhältnisse bedeuten im Rahmen der vorliegenden Erfindung stets Gewichtsverhältnisse.
Dabei sind Bereiche von 20 : 80 bis 50 : 50 und insbesondere 30:70 bis 50 : 50 besonders bevorzugt.

Besonders geeignete Polysiloxane sind "SE 52" und "OV 1701-vi". Diese Substanzen sind dem Fachmann bekannt (SE 52 besteht zu 5% aus Diphenyl- und zu 95% aus Dimethyl-Polysiloxan; OV 1701-vi besteht zu 14% aus Cyanopropylphenyl- und zu 86% aus Dimethyl-Polysiloxan) und kommerziell verfügbar.

Es hat sich gezeigt, daß sich folgende stationäre Phasen besonders gut zur Lösung der erfindungsgemäßen Aufgabe eignen:
- Mischungen aus (2,3-Di-O-methyl-6-O-TBDMS)-β-CD und SE 52.
- Mischungen aus (2,3-Di-O-acetyl-6-O-TBDMS)-β-CD und OV 1701-vi

Die **Schichtdicke** der stationären Phase in der GC-Kapillare ist an sich nicht kritisch, und wird insbesondere auf Werte im Bereich von Bereich von 0,15 µm bis 0,35 µm eingestellt. Werte von etwa 0,25 µm sind besonders bevorzugt.

Als **Trägergas** wird vorzugsweise ein Gas eingesetzt, daß inert gegenüber dem zu bestimmenden Sandelriechstoff der Struktur (I) ist. Geeignet sind beispielsweise Wasserstoff, Helium, Stickstoff. Die Durchflußgeschwindigkeit ist an sich nicht kritisch. Man stellt sie insbesondere auf Werte im Bereich von 1 bis 5 ml/min ein.

Die **Länge der Kapillarsäule** ist an sich nicht kritisch und wird vorzugsweise im Bereich von 20 bis 100 m und insbesondere von etwa 30 m gewählt.

Der **innere Durchmesser der Kapillarsäule** ist an sich nicht kritisch und wird insbesondere auf Werte im Bereich von 0,1 bis 0,53 mm eingestellt. Besonders bevorzugt sind Werte im Bereich von 0,2 bis 0,3 mm.

Das **Material der Kapillarsäulen** ist an sich nicht kritisch, vorzugsweise verwendet man jedoch Duranglas oder fused-silica-Säulen.

Die **Temperatur der Säule** wird vorzugsweise auf Werte im Bereich von 20 bis 400 °C eingestellt. Dabei ist es besonders vorteilhaft, ein **Temperaturprogramm** zu fahren. Dies ist insbesondere von Bedeutung, wenn man sicherstellen möchte, daß nicht lediglich eine mehr oder minder starke Antrennung der Enantiomeren erfolgt, sondern daß eine gute Trennung - der Fachmann spricht in diesem Zusammenhang von einer "Basislinientrennung" - zuverlässig erreicht wird.

Die erfindungsgemäß einzusetzenden **Cyclodextrinderivate** sind dem Fachmann bekannt. Sie sind durch folgende Struktur gekennzeichnet:

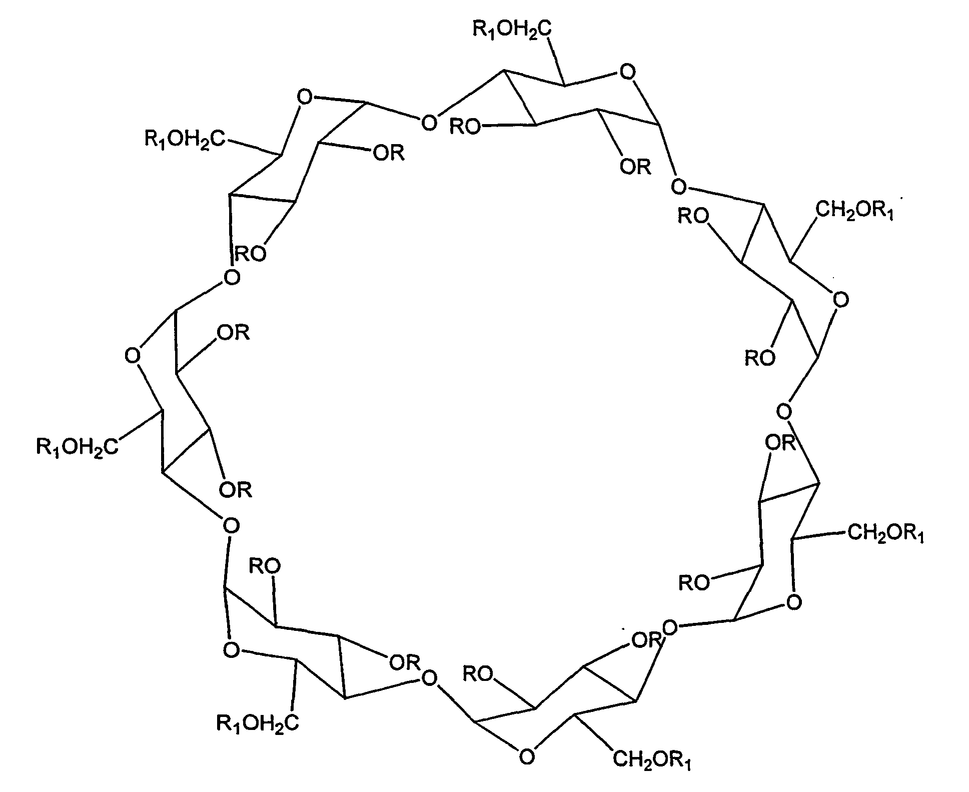

Dabei bedeutet der Rest R₁ eine tert.-Butyldimethylsilylgruppe und der Rest R eine Methyl- oder Acetylgruppe. Es ist ohne weiteres ersichtlich, daß es sich für R = Methyl um Heptakis-(2,3-di-O-methyl-6-O-tert.-butyldimethylsilyl)-β-Cyclodextrin und für R = Acetyl um Heptakis-(2,3-di-O-acetyl-6-O-tert.-butyldimethylsilyl)-β-Cyclodextrin handelt. Die beiden Substanzen werden nachfolgend auch abkürzend als (2,3-Di-O-methyl-6-O-TBDMS)-β-CD und (2,3-Di-O-acetyl-6-O-TBDMS)-β-CD bezeichnet.

Für die Bestimmung des Enantiomerenverhältnisses von 2-Methyl-4-(2,2,3-trimethylcyclopent-3-en-1-yl)-but-2-en-1-ol (I-a), 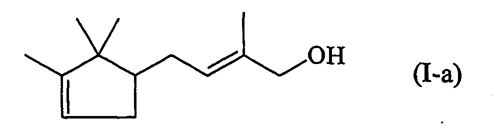 wobei als stationäre Phase (2,3-Di-O-acetyl-6-O-TBDMS)-β-CD in OV 1701-vi zum Einsatz kommt, hat sich folgendes Temperaturprogramm als besonders vorteilhaft erwiesen und führt zu einer zuverlässigen Basislinientrennung: Die Anfangstemperatur von 40 °C wird 5 Minunten gehalten, dann wird mit 20 °C/min auf 80 °C geheizt, diese Temperatur wird für 200 Minuten gehalten, dann wird mit 0,5 °C/min auf 150 °C geheizt. In zahlreichen Versuchen hat sich herausgestellt, daß mit abweichenden Temperaturprogrammen wesentlich schlechtere oder unbrauchbare Ergebnisse erzielt werden.

Für die Bestimmung des Enantiomerenverhältnisses von 2-Methyl-4-(2,2,3-trimethylcyclopent-3-en-1-yl)-but-2-en-1-al (I-b), 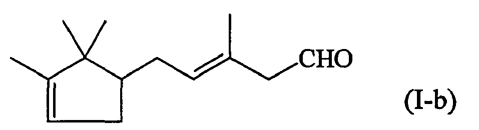 wobei als stationäre Phase (2,3-Di-O-acetyl-6-O-TBDMS)-β-CD in OV 1701-vi zum Einsatz kommt, hat sich folgendes Temperaturprogramm als besonders vorteilhaft erwiesen und führt zu einer zuverlässigen Basislinientrennung: Die Anfangstemperatur von 60 °C wird 5 Minunten gehalten, dann wird mit einer Heizrate von 2 °C/min auf 210 °C geheizt und diese Temperatur wird für 10 Minuten gehalten.

Für die Bestimmung des Enantiomerenverhältnisses von alpha-Campholenaldehyd (I-c), 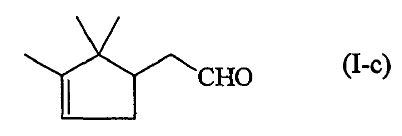 wobei als stationäre Phase (2,3-Di-O-methyl-6-O-TBDMS)-β-CD in SE 52 zum Einsatz kommt, hat sich folgendes Temperaturprogramm als besonders vorteilhaft erwiesen und führt zu einer zuverlässigen Basislinientrennung: Die Anfangstemperatur von 60 °C wird 5 Minunten gehalten, dann wird mit einer Heizrate von 2 °C/min auf 210 °C geheizt und diese Temperatur wird für 10 Minuten gehalten.

Die Herstellung der erfindungsgemäß einzusetzenden Kapillarsäulen umfaßt mehrere Schritte und geschieht vorzugsweise wie folgt: (1) Hochtemperatursilylierung (Desaktivierung der Oberfläche): Als Silylierungsmittel werden verschiedene Silane einzeln oder in Mischung verwendet. Insbesondere wird Phenyldimethylsilan eingesetzt; die Silylierung erfolgt dabei bei folgendem Temperaturprogramm: 200 °C Anfangstemperatur, mit einer Heizrate von 2 °C/min auf 400 °C (bei Glassäulen) bzw. 380 °C (bei fased-silica-Säulen), die Endtemperatur wird für 12 Stunden gehalten. Nach der Silylierung wird das Silylierungsmittel durch Spülen der Säule mit verschiedenen Lösemitteln entfernt; (2) Belegung: Füllen der Säule mit der Belegungslösung (Cyclodextrinderivat und Polysiloxan in Dichlormethan/Pentan 1:1), Abdampfen des Lösemittels. Speziell bei Glassäulen (also nicht bei fused-silica-Säulen) wird den genannten Schritten noch folgende Prozedur vorgelagert: (0-a) Leaching (Entfernung von Metallionen aus der Glasoberflaeche): Füllen der Säule mit 18 %iger Salzsäure, Erhitzung auf 180 °C für 15 Stunden; (0-b) Rinsing (Spülen zur Entfernung der herausgelösten Metallionen): Spülen mit 1 %iger Salzsäure; (0-c) Dehydration: Trockung für 2 Stunden bei 280 °C.

Das erfindungsgemäße Verfahren eignet sich in ganz besonderer Weise zur Bestimmung des Enantiomerenverhältnisses folgender Verbindungen:
- 2-Methyl-4-(2,2,3-trimethylcyclopent-3-en-1-yl)-but-2-en-1-ol (I-a)
- 2-Methyl-4-(2,2,3-trimethylcyclopent-3-en-1-yl)-but-2-en-1-al (I-b)
- α-Campholenaldehyd (I-c)

Dabei ist wiederum die Bestimmung des Enantiomerenverhältnisses von 2-Methyl-4-(2,2,3-trimethylcyclopent-3-en-1-yl)-but-2-en-1-ol (I-a) ganz besonders bevorzugt.

### Beispiele

### Beispiel 1

### Bestimmung des Enantiomerenverhältnisses von Campholenaldehyd:

Die enantioselektive Kapillargaschromatographie von handelsüblichem Campholenaldehyd (Substanz der Fa. Glidco) wurde an einem Fisons Instruments GC 8000 Gaschromatographen, ausgestattet mit einem Split/Splitless-Injektor und einem Flammenionisationsdetektor durchgeführt (Trägergas: H₂, Säulenvordruck: 95 kPa; Injektortemperatur: 240°C; Splitfluß: 30 mL/min; Detektortemperatur: 250°C). Die Trennung wurde mittels einer 30 m x 0,23 mm i.d. Duranglassäule, die mit einer stationären Phase aus 30 Gew.-% Heptakis(2,3-di-O-methyl-6-O-*tert-*butyldimethylsilyl)-β-Cyclodextrin und 70 Gew.-% SE 52 belegt war (Filmdicke : 0,23 µm), erzielt. Das Temperaturprogramm war wie folgt: isotherm für 5 min bei 60°C, mit einer Heizrate von 2 °C/min auf eine Endtemperatur von 210 °C, diese wurde für 10 min gehalten.
- Retentionszeiten: (S)-α-Campholenaldehyd (26,5 min)
(R)-α-Campholenaldehyd (26,9 min)

### Beispiel 2

### Bestimmung des Enantiomerenverhältnisses von 2-Methyl-4-(2,2,3-trimethylcyclopent-3-en-1-yl)-but-2-enal:

Die enantioselektive Kapillargaschromatographie von 2-Methyl-4-(2,2,3-trimethylcyclopent-3-en-1-yl)-but-2-enal, das aus handelsüblichem Campholenaldehyd gemäß Beispiel 1 durch Kondensation mit Propionaldehyd hergestellt worden war, wurde an einem Fisons Instruments GC 8000 Gaschromatographen, ausgestattet mit einem Split/Splitless-Injektor und einem Flammenionisationsdetektor durchgeführt (Trägergas: H₂, Säulenvordruck: 95 kPa; Injektortemperatur: 240°C; Splitfluß: 30 mL/min; Detektortemperatur: 250°C). Die Trennung wurde mittels einer 30 m x 0,23 mm i.d. Duranglassäule, die mit einer stationären Phase aus 50 Gew.-% Heptakis(2,3-di-O-acetyl-6-O-*tert-*butyldimethylsilyl)-β-Cyclodextrin und 50 Gew.-% OV 1701-vi belegt war (Filmdicke : 0,23 µm), erzielt. Das Temperaturprogramm war wie folgt: isotherm für 5 min bei 60°C, mit einer Heizrate von 2 °C/min auf eine Endtemperatur von 210 °C, diese wurde für 10 min gehalten.
Retentionszeiten:
(S)-2-Methyl-4-(2,2,3-trimethylcyclopent-3-en-1-yl)-but-2-enal (51,6 min)
(R)-2-Methyl-4-(2,2,3-trimethylcyclopent-3-en-1-yl)-but-2-enal (51,8 min)

### Beispiel 3

### Bestimmung des Enantiomerenverhältnisses von 2-Methyl-4-(2,2,3-trimethylcyclopent-3-en-1-yl)-but-2-enol:

Die enantioselektive Kapillargaschromatographie von 2-Methyl-4-(2,2,3-trimethylcyclopent-3-en-1-yl)-but-2-enol, das durch selektive Reduktion der Aldehyd-Vorstufe gemäß Beispiel 2 hergestellt worden war, wurde an einem Fisons Instruments GC 8000 Gaschromatographen, ausgestattet mit einem Split/Splitless-Injektor und einem Flammenionisationsdetektor durchgeführt (Trägergas: H₂, Säulenvordruck: 95 kPa; Injektortemperatur: 240°C; Splitfluß: 30 mL/min; Detektortemperatur: 250°C). Die Trennung wurde mittels einer 30 m x 0,23 mm i.d. Duranglassäule, die mit einer stationären Phase aus 50 Gew.-% Heptakis(2,3-di-O-acetyl-6-O-tert-butyldimethylsilyl)-β-Cyclodextrin und 50 Gew.-% OV 1701-vi belegt war (Filmdicke : 0,23 µm), erzielt.
Temperaturprogram: isotherm bei 40°C für 5 min, mit einer Heizrate von 20°C/min auf 80°C, nach einem weiteren isothermen Schritt für 200 min, mit einer Heizrate von 0,5°C/min auf eine Endtemperatur von 150°C.
Retentionszeiten:
(S)-2-Methyl-4-(2,2,3-trimethylcyclopent-3-en-1-yl)-but-2-enol (259,7 min)
(R)-2-Methyl-4-(2,2,3-trimethylcyclopent-3-en-1-yl)-but-2-enol (261,1 min)

## Patentansprüche

1. Verfahren zur Bestimmung des Enantiomerenverhältnisses von Trimethylcyclopenten-Derivaten der Struktur (I) 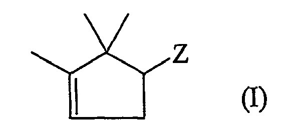 worin Z einen Alkylrest mit 1 bis 10 C-Atomen, der gesättigt oder olefinisch ungesättigt, geradkettig oder verzweigt sein kann und der durch eine OH- oder CHO-Gruppe substituiert ist, bedeutet, durch Kapillargaschromatographie, wobei man eine stationäre Phase einsetzt, die mindestens eine Verbindung, die ausgewählt ist aus der Gruppe Heptakis-(2,3-di-O-methyl-6-O-tert.-butyldimethylsilyl)-β-Cyclodextrin und Heptakis-(2,3-di-O-acetyl-6-O-tert.-butyldimethylsilyl)-β-Cyclodextrin und mindestens ein Polysiloxan enthält, wobei man das Mischungsverhältnis von Cyclodextrinderivaten und Polysiloxanen auf einen Wert im Bereich von 10 : 90 bis 50 : 50 einstellt.

2. Verfahren nach Anspruch 1, wobei man das Mischungsverhältnis von Cyclodextrinderivaten und Polysiloxanen auf einen Wert im Bereich von 30:70 bis 50 : 50 einstellt

3. Verfahren nach Anspruch 1 oder 2, wobei es sich bei der Verbindung (I) um 2-Methyl-4-(2,2,3-trimethylcyclopent-3-en-1-yl)-but-2-en-1-ol handelt.

4. Verfahren nach Anspruch 1 oder 2, wobei es sich bei der Verbindung (I) um 2-Methyl-4-(2,2,3-trimethylcyclopent-3-en-1-yl)-but-2-en-1-al handelt.

5. Verfahren nach Anspruch 1 oder 2, wobei es sich bei der Verbindung (I) um alpha-Campholenaldehyd handelt.

6. Verfahren nach Anspruch 3 oder 4, wobei man als stationäre Phase Heptakis-(2,3-di-O-acetyl-6-O-tert.-butyldimethylsilyl)-β-Cyclodextrin in OV 1701-vi einsetzt.

7. Verfahren nach Anspruch 5, wobei man als stationäre Phase Heptakis-(2,3-di-O-acetyl-6-O-tert.-butyldimethylsilyl)-β-Cyclodextrin in SE 52 einsetzt.

8. Verfahren nach Anspruch 3, wobei man als stationäre Phase Heptakis-(2,3-di-O-acetyl-6-0-tert.-butyldimethylsilyl)-β-Cyclodextrin in OV 1701-vi einsetzt und wobei man bei der Durchführung der Chromatographie folgendes Temperaturprogramm fährt: Halten der Anfangstemperatur von 40 °C für 5 Minunten, dann Heizen mit 20 °C/min auf 80 °C, dann Halten dieser Temperatur für 200 Minuten, anschließend Heizen mit 0,5 °C/min auf 150 °C.

## Claims

1. Process for determining the enantiomer ratio of trimethylcyclopentene derivatives of the structure (I) 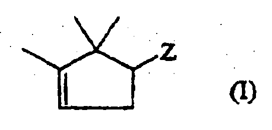 wherein Z denotes an alkyl radical having 1 to 10 C atoms, which may be saturated or olefinically unsaturated, straight-chain or branched and which is substituted by an OH group or CHO group, by capillary gas chromatography, wherein a stationary phase is used, which contains at least one compound which is selected from the group heptakis-(2,3-di-O-methyl-6-O-tert.-butyldimethylsilyl)-β-cyclodextrin and heptakis-(2,3-di-O-acetyl-6-O-tert.-butyldimethylsilyl)-β-cyclodextrin and at least one polysiloxane, wherein the mixing ratio of cyclodextrin derivatives and polysiloxanes is adjusted to a value in the range from 10:90 to 50:50.

2. Process according to claim 1, wherein the mixing ratio of cyclodextrin derivatives and polysiloxanes is adjusted to a value in the range from 30:70 to 50:50.

3. Process according to claim 1 or 2, wherein the compound (I) is 2-methyl-4-(2,2,3-trimethylcyclopent-3-en-1-yl)-but-2-en-1-ol.

4. Process according to claim 1 or 2, wherein the compound (I) is 2-methyl-4-(2,2,3-trimethylcyclopent-3-en-1-yl)-but-2-en-1-al.

5. Process according to claim 1 or 2, wherein the compound (I) is alpha-campholene aldehyde.

6. Process according to claim 3 or 4, wherein heptakis-(2,3-di-O-acetyl-6-O-tert.-butyldimethylsilyl)-β-cyclodextrin in OV 1701-vi is used as the stationary phase.

7. Process according to claim 5, wherein heptakis-(2,3-di-O-acetyl-6-O-tert.-butyldimethylsilyl)-β-cyclodextrin in SE 52 is used as the stationary phase.

8. Process according to claim 3, wherein heptakis-(2,3-di-O-acetyl-6-O-tert.-butyldimethylsilyl)-β-cyclodextrin in OV 1701-vi is used as the stationary phase and wherein when carrying out the chromatography, the following temperature program is operated: Maintaining the initial temperature of 40°C for 5 minutes, then heating at 20°C/minute to 80°C, then maintaining this temperature for 200 minutes, then heating at 0.5°C/minute to 150°C.

## Revendications

1. Procédé pour la détermination du rapport énantiomérique de dérivés de triméthylcyclopentène de structure (I) 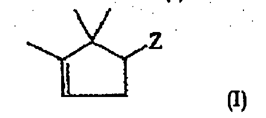 dans laquelle Z représente un radical alkyle comportant 1 à 10 atomes de C, pouvant être saturé ou oléfiniquement insaturé, à chaîne droite ou ramifié et substitué par un groupe OH ou CHO, par chromatographie capillaire, selon lequel on utilise une phase stationnaire qui contient au moins un composé, choisi dans le groupe heptakis-(2,3-di-O-méthyl-6-O-tert-butyldiméthylsilyl)-β-cyclodextrine et heptakis-(2,3-di-O-acétyl-6-O-tert-butyldùnéthylsilyl)-β-cyclodextrine et au moins un polysiloxane, le rapport de mélange de dérivés de la cyclodextrine et de polysiloxanes étant ajusté à une valeur de l'ordre de 10:90 à 50:50.

2. Procédé selon la revendication 1,
selon lequel
on ajuste le rapport de mélange de dérivés de la cyclodextrine et de polysiloxanes à une valeur de l'ordre de 30:70 à 50:50.

3. Procédé selon la revendication 1 ou 2,
selon lequel
le composé (I) est du 2-méthyl-4-(2,2,3-triméthylcyclopent-3-ène-1-yl)-but-2-ène-1-ol.

4. Procédé selon la revendication 1 ou 2,
selon lequel
le composé (I) est du 2-méthyl-4-(2,2,3-triméthylcyclopent-3-ène-1-yl)-but-2-éne-1-al.

5. Procédé selon la revendication 1 ou 2,
selon lequel
le composé (I) est un aldéhyde d'alpha-campholène.

6. Procédé selon la revendication 3 ou 4,
selon lequel
comme phase stationnaire, on utilise de la heptakis-(2,3-di-O-acétyl-6-O-tert-butyldiméthylsilyl)-β-cyclodextrine dans OV 1701-vi.

7. Procédé selon la revendication 5,
selon lequel
comme phase stationnaire, on utilise de la heptakis-(2,3-di-O-acétyl-6-O-tert-butyldiméthylsilyl)-β-cyclodextrine dans du SE 52.

8. Procédé selon la revendication 3,
selon lequel
comme phase stationnaire, on utilise de la heptakis-(2,3-di-O-acétyl-6-O-tert-butyldiméthylsilyl)-β-cyclodextrine dans du OV 1701-vi, et on applique le programme de température suivant lors de la chromatographie : maintien de la température initiale à 40°C pendant 5 minutes, chauffage à 80°C à raison de 20°C/minute, puis maintien de cette température pendant 200 minutes, puis chauffage à 150°C à raison de 0,5°C/minute.
